Europäisches Patentamt

(19) European Patent Office

Office européen des brevets

(11) Veröffentlichungsnummer: **0 027 148**
A1

(12) **EUROPÄISCHE PATENTANMELDUNG**

(21) Anmeldenummer: 79103895.3

(22) Anmeldetag: 10.10.79

(51) Int. Cl.³: **G 01 J 3/42**

(43) Veröffentlichungstag der Anmeldung:
22.04.81 Patentblatt 81/16

(84) Benannte Vertragsstaaten:
AT DE FR GB IT NL SE

(71) Anmelder: SIEMENS AKTIENGESELLSCHAFT Berlin und München
Postfach 22 02 61
D-8000 München 22(DE)

(72) Erfinder: Paul, Bernt-Joachim, Dr.
Friedrich-Bauer-Strasse 3
D-8250 Erlangen(DE)

(54) Optoelektronische Einrichtung.

(57) Die Erfindung bezieht sich auf eine optoelektronische Einrichtung zur Messung der Konzentration einer Meßsubstanz.

Erfindungsgemäß ist ein kreisscheibenförmiger, doppelseitig verspiegelter Drehspiegel (10), dessen äußerer Rand mit Ausschnitten versehen ist, derart geneigt im Strahlengang (4) einer Strahlungsquelle (2) angeordnet, daß er zwei Teilstrahlen (14 und 16) erzeugt und auch wieder vereinigt. Jeweils durch ein Interferenzfilter (18 bzw. 20) erhält der eine Strahlengang die Meßwellenlänge ($\lambda_1$) und der andere die Vergleichswellenlänge ($\lambda_2$). Die Einrichtung hat den Vorteil eines identischen geometrischen Strahlenganges für beide alternierend emittierten Wellenlängen ($\lambda_1$ und $\lambda_2$) und einer kurzen mechanischen Phasenumschaltung durch die Wirkung des Drehspiegels (10) an zwei Zwischenbildern der Strahlungsquelle (2). Sie dient zur Prüfung und Überwachung der bewegten Meßsubstanz.

FIG 1

SIEMENS AKTIENGESELLSCHAFT      Unser Zeichen
Berlin und München              VPA 78 P 7 5 3 2 EUR

Optoelektronische Einrichtung

Die Erfindung bezieht sich auf eine optoelektronische Einrichtung zur Messung der Konzentration einer Meßsubstanz
durch Absorbieren der Strahlung einer Meßwellenlänge und
Herleitung eines Meßsignals durch Vergleich mit der Strahlung einer Vergleichswellenlänge.

Störungen im Produktionsprozeß einer Ware, die in Form
langer Bahnen hergestellt wird, beispielsweise in der
Papier- oder Kunststoffindustrie, lassen sich bekanntlich
nicht völlig vermeiden. In der Qualitätskontrolle werden
beispielsweise Löcher, Falten, Verunreinigungen und Beschichtungsfehler sowie insbesondere Abweichungen in der
Dichte erfaßt und ausgewertet. Voraussetzung für einen hohen Qualitätsstandard ist ein zuverlässiges, objektives
Meßverfahren, das reproduzierbar auch über lange Zeiträume
arbeitet. In der Papierindustrie haben sich deshalb photoelektronische Prüfverfahren mit einer Durchsichtsprüfung
der als Meßsubstanz dienenden Ware bereits bewährt. Die
Meßsubstanz wird an der Inspektionsstelle falten- und
flatterfrei geführt. Mit der Strahlung einer Lichtquelle
wird die Meßsubstanz durchleuchtet. Photoelemente, die sich

Kin 2 Sh / 2.8.1978

aneinandergereiht staubgeschützt in sogenannten Abtasteinheiten quer über die gesamte Bahnenbreite erstrecken, messen das durch die Bahn scheinende Licht, das von der Meßsubstanz zum Teil absorbiert ist. Jede Veränderung in der
Bahnstruktur führt in dem Photoelement des Strahlungsempfängers zu einer Stromänderung, die als Fehlersignal in
einer nachgeschalteten Elektronik ausgewertet wird.

Der Erfindung liegt nun die Aufgabe zugrunde, die Empfindlichkeit, Genauigkeit und das zeitliche Auflösungsvermögen
von optischen Konzentrationsmeßgeräten, die mit einer von
der Meßsubstanz zu absorbierenden Meßwellenlänge und einer
benachbarten, im wesentlichen nicht absorbierten Vergleichswellenlänge aus der gleichen, thermischen Strahlungsquelle
arbeiten, zu verbessern. Die Erfindung geht aus von der Erkenntnis, daß eine Strahlungsquelle erforderlich ist, die
in vier Phasen alternierend, Strahlung um die Meßwellenlänge emittiert, sperrt und Strahlung mit der Vergleichswellenlänge emittiert und ebenfalls wieder sperrt. Die
Übergänge zwischen den vier Phasen müssen möglichst steil
erfolgen. Außerdem dürfen sich die Frequenzbänder um die
Meßwellenlänge und die Vergleichswellenlänge beim Überstreichen der Phasenabschnitte nicht verschieben. Dies ist
bei der Verwendung von Interferenzfiltern zur Selektion
der Wellenlängen in bekannten optoelektronischen Einrichtungen nur möglich, wenn die Filter unter konstantem Einfallswinkel durchstrahlt werden. Der für ein gutes Signal-
Rauschverhältnis erforderliche steile Phasenwechsel ist
mit optisch-mechanischem Schaltbetrieb nur dann möglich,
wenn die Strahlenumschaltung im Bildpunkt der Strahlungsquelle erfolgt. Dort ist aber die Divergenz des Strahlenbündels wiederum maximal.

Eine bekannte Anordnung mit feststehenden Filtern und mit
zwei über Strahlenteiler angesteuerten Detektoren ist in
der Genauigkeit durch die unvermeidlichen Unterschiede der Kennlinien beider Detektoren begrenzt ("Infra nd Moisture Sensor 2235", Measurex Corp. / Cupertino PA 1091 GM 11 - 77).

Die erwähnte Aufgabe wird deshalb erfindungsgemäß dadurch gelöst, daß ein kreisscheibenförmiger, doppelseitig verspiegelter Drehspiegel, dessen äußerer Rand mit wenigstens einem Ausschnitt versehen ist, derart geneigt im Strahlengang einer Strahlungsquelle angeordnet ist, daß mit der Drehung jeweils abwechselnd durch den Ausschnitt ein Teilstrahl und durch Reflexion ein weiterer Teilstrahl gebildet wird. Im ersten Teilstrahl ist ein Schmalband-Interferenzfilter für die Meßwellenlänge und im zweiten Teilstrahl ein weiteres Schmalband-Interferenzfilter mit der als Vergleichswellenlänge benutzten Zentralwellenlänge $\lambda_1$ vorgesehen. Durch Reflexion an zwei Festspiegeln werden die beiden Teilstrahlen zum diagonal gegenüberliegenden Teil des Drehspiegels abgelenkt. Der Ausschnitt am Drehspiegel ist so gewählt, daß dem Ausschnitt am diagonal gegenüberliegenden Umfang des Drehspiegels jeweils ein spiegelnder Teil zugeordnet ist.

Die Zahl der Ausschnitte ist deshalb 2n - 1, mit n = 1, 2, 3 ... und ihre Breite erstreckt sich über einen Kreissektor $\frac{\pi}{4n-2}$, mit dazwischenliegenden äquidistanten Stegen der Breite $\frac{3\pi}{4n-2}$. Die durch die Spiegeldrehung bewirkte Strahlungsumschaltung hat die Wiederholfrequenz $(2n - 1) \cdot f_s$, wobei $f_s$ die Umlauffrequenz, d.h. die Drehzahl des Spiegels ist. Im Sonderfall n = 1, mit nur einem Ausschnitt der Breite $\frac{\pi}{4-2} = \frac{\pi}{2} = 90°$, ist die Wiederholfrequenz des Spiegels. In diesem Fall muß die Spiegelhalterung mit einem Ausgleichsgewicht versehen werden. Bei einer Spiegelanordnung mit mehreren Ausschnitten, d.h. mit n > 1, ist kein Ausgleichsgewicht erforderlich.

Der Drehspiegel ist vorzugsweise als Kreisringscheibe gestaltet, deren innere Öffnung mit dem Rand einer topfförmigen Hülse verbunden ist, in die der Antriebsmotor des Drehspiegels hineinragt.

Durch diese Anordnung des Strahlenganges mit zwei Zwischenbildern und mit dem doppelseitig verspiegelten Drehspiegel, der derart diagonal zwischen den beiden Teilstrahlengängen angeordnet ist, daß er sie an den beiden Zwischenbildern auf gegenüberliegenden Seiten schneidet, erhält man eine große Steilheit des Phasenüberganges. Auf den infolge der Drehspiegelbewegung alternierend durchstrahlten Wegen werden mit Zwischenlinsen bezüglich beider Zwischenbildebenen telezentrische Strahlengänge erzeugt, in denen die beiden Interferenzfilter für die Meßwellenlänge bzw. die Vergleichswellenlänge so angebracht sind, daß sie über ihren vollen Querschnitt senkrecht durchstrahlt werden.

Das Antriebsproblem auf dem durch den Strahlengang eng begrenzten Raum für den Spiegel wird dadurch gelöst, daß der Antriebsmotor wenigstens annähernd mit seiner Mitte in die Spiegelebene gelegt wird. Der kreisringförmige Spiegel wird dann auf einer um die eine Motorhälfte umlaufenden topfförmigen Hülse befestigt.

Der doppelseitig verspiegelte Drehspiegel bewirkt die zeitlich auf verschiedenen Phasenlagen des Drehspiegels aufgegliederte räumliche Trennung in die beiden Teilstrahlen mit der Meßwellenlänge und der Vergleichswellenlänge und zugleich ihre Wiedervereinigung in den Strahlengang, der in der Objektebene durch die Meßsubstanz hindurchtritt und von dieser zum Teil absorbiert wird.

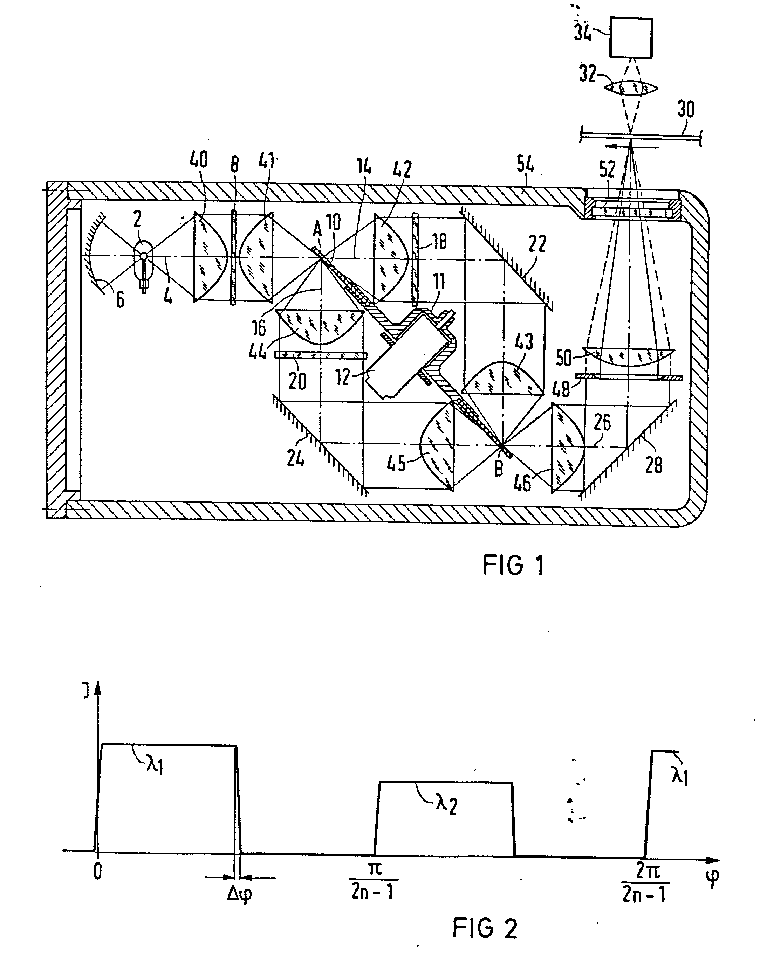

Zur weiteren Erläuterung der Erfindung wird auf die Zeichnung Bezug genommen, in deren Figur 1 ein Ausführungsbeispiel einer optoelektronischen Einrichtung zur Messung der Konzentration einer Meßsubstanz nach der Erfindung als Querschnitt schematisch veranschaulicht ist. In Figur 2 ist die an der Meßstelle verfügbare Intensität der Strahlung in Abhängigkeit vom Phasenwinkel des Drehspiegels in einem Diagramm aufgetragen.

Entsprechend der Figur erzeugt eine Strahlungsquelle 2, beispielsweise eine Halogen-Glühlampe, ein in der Figur durch die Randstrahlenbegrenzung angedeutetes Strahlenbündel 4, das vorzugsweise noch an einem Beleuchtungskonkavspiegel 6 reflektiert werden kann und durch ein Vorfilter 8 hindurchtritt, und auf einen Drehspiegel 10 trifft, der vorteilhaft als Ringscheibe gestaltet sein kann und am Rand einer topfförmigen Hülse 11 befestigt ist. In die Hülse 11 ragt zum Teil ein Antriebsmotor 12 hinein, der vorzugsweise ein kollektorloser Motor mit einem elektronischen Kommutator zur Steuerung der Stromversorgung für die Ständerwicklung zur Erzeugung der Drehdurchflutung sein kann. Der Drehspiegel 10 ist mit einem oder mehreren in der Figur nicht dargestellten sektorförmigen Ausschnitten versehen und läßt an der Stelle A während der Drehung entweder durch einen seiner Ausschnitte einen Teilstrahlengang 14 hindurch oder bildet durch Spiegelung einen weiteren Teilstrahlengang 16. Dem Teilstrahlengang 14 ist ein Interferenzfilter 18 mit der Meßwellenlänge $\lambda_1$ zugeordnet. Entsprechend ist im zweiten Strahlengang 16 ein Interferenzfilter 20 mit der Vergleichswellenlänge $\lambda_2$ angeordnet. Durch Spiegelung jeweils an einem Spiegel 22 bzw. 24 werden die Teilstrahlengänge 14 und 16 zum Drehspiegel 10 zurückgelenkt und treffen an der Stelle B auf gegenüberliegenden Flachseiten auf den Drehspiegel 10. Die Stellen A und B liegen am Drehspiegel 10 diagonal einander gegenüber. An der Stelle B werden die Teilstrahlengänge 14 und 16 durch den Drehspiegel durch jeweils abwechselnde Spiegelung des einen Strahlenganges und Durchlassen des anderen Strahlenganges zu einem gemeinsamen Strahlengang 26 wieder vereinigt, der an einem weiteren Spiegel 28 nochmals abgelenkt werden kann und durch eine Meßsubstanz 30 hindurchtritt, die beispielsweise eine in Richtung eines nicht näher bezeichneten Pfeils bewegte Papierbahn sein kann. Der Strahlengang 26 wird durch die Meßsubstanz 30, bevorzugt während der $\lambda_1$-Phase, zum Teil absorbiert und gelangt über eine lediglich als Sammellinse angedeutete Optik 32 auf einen Strahlungsempfänger 34.

Zur Bündelung der Strahlung 4 können noch zwei Kondensorlinsen 40 und 41 vorgesehen sein. In gleicher Weise können im Teilstrahlengang 14 zwei Kondensorlinsen 42 und 43 und im Teilstrahlengang 16 ebenfalls zwei Kondensorlinsen 44 und 45 angeordnet sein. Für den wieder vereinigten Strahlengang 26 ist ebenfalls eine Kondensorlinse 46 vorgesehen. Außerdem tritt der Strahl 26 nach der Spiegelung durch eine Irisblende 48 sowie eine Optik 50 und durch ein Austrittsfenster 52 des Gehäuses 54 der Meßeinrichtung.

Aus dem als beidseitig verspiegelter Kreisring gestalteten Drehspiegel 10 ist in seinem Radienbereich der Berührung mit den Strahlengängen 4, 14 und 16 für den Fall n = 1 ein 90° breiter Sektor ausgeschnitten. In den Spiegelstellungen, in denen der Ausschnitt eines der beiden Zwischenbilder der Strahlungsquelle 2 überstreicht, gelangt Strahlung, die durch das entsprechende Interferenzfilter 18 oder 20 auf einen Wellenlängenbereich in der Umgebung der Meßwellenlänge $\lambda_1$ bzw. der Vergleichswellenlänge $\lambda_2$ gefiltert ist, über die Meßsubstanz 30 zum Strahlungsempfänger 34. In den übrigen Phasenlagen ist die Strahlungsquelle 2 gesperrt.

Entsprechend dem Diagramm der Figur 2, in dem die Intensität I in Abhängigkeit vom Phasenwinkel $\varphi$ aufgetragen ist, entsprechen die Übergangsbereiche zwischen den vier Phasen-

lagen, einem Winkel $\Delta \varphi$ , um den der Drehspiegel 10 gedreht werden muß, damit eine Kante eines Spiegelausschnittes das Zwischenbild der Strahlungsquelle 2 voll
überstreicht. Hat die Strahlungsquelle 2 senkrecht zur
Zeichenebene der Fig. 1 eine Breite von beispielsweise
b = 1,4 mm und beträgt der Radius des Drehspiegels 10 an
den Schnittpunkten der optischen Achsen r = 71 mm, dann
ist

$$\Delta \varphi = \frac{b}{2 \ r} \cdot 2\tilde{\pi} = \frac{b}{r} = 0,0197$$

$$\Delta \varphi = 1,13°$$

Die Intensität I $(\varphi)$ des auf die Meßsubstanz 30 auftreffenden Strahlenganges 26 hat somit den zeitlichen
Verlauf, wie er im Diagramm der Fig. 2 dargestellt ist.
Die mit der Meßwellenlänge $\lambda_1$ bzw. im dritten Phasenabschnitt mit der Vergleichswellenlänge $\lambda_2$ bezeichneten
Scheitelwerte des angenähert rechteckförmigen Signals
sind wegen der unterschiedlichen Durchlässigkeit der zugeordneten Interferenzfilter 18 bzw. 20 im allgemeinen
verschieden hoch. Sie können durch ein in den Strahl 14
eingesetztes Neutralfilter, beispielsweise in der Form
einer abschwächenden Siebplatte, gleichgemacht oder auch
auf jeden gewünschten Verhältniswert gebracht werden.

Nach der Vereinigung der Teilstrahlen 14 und 16 an der
Stelle B des Drehspiegels 10 ist der geometrische Strahlengang 26 für die Wellenlängebereiche um $\lambda_1$ und $\lambda_2$
identisch, während der zeitliche Verlauf entsprechend
Figur 2 um den Phasenwinkel $\frac{\tilde{\pi}}{2n-1}$ versetzt ist. Der
Strahlungsempfänger 34 mit der vorgeschalteten Empfängeroptik 32 wird deshalb unabhängig von seiner Justierung relativ zur Strahlungsquelle 2 mit einem zwischen
der Meßwellenlänge $\lambda_1$ und der Vergleichswellenlänge $\lambda_2$
alternierenden Intensitätsprofil nach Fig. 2 bzw. mit
einem durch die erwähnte Siebplatte nach Bedarf korrigierten Intensitätsprofil bestrahlt.

Die Änderung des Amplitudenverhältnisses der auf den Strahlungsempfänger, beispielsweise einen Halbleiterdetektor, treffenden Intensiätswerte durch Absorption in der Meßsubstanz 30 ist dann das Maß für die Flächendichte des bevorzugt die Meßwellenlänge $\lambda_1$ absorbierenden Bestandteils der Meßsubstanz 30. Das durch die Absorption in der Meßsubstanz geänderte Intensitätsverhältnis ist insbesondere auch unabhängig von Verschiebungen der Meßsubstanz 30 in Richtung der Achse des aus dem Gehäuse 54 durch das Fenster 52 austretenden Strahlenganges 26, d.h. quer zu seiner Bewegungsrichtung. Dies gilt auch für stark streuende Meßsubstanzen 30, wie beispielsweise Papier und Pappe, wenn die Streuung kohärent erfolgt.

Durch eine im Strahlengang 26, vorzugsweise im telezentrischen Bereich, angeordnete verstellbare Irisblende 48 kann die Intensität für beide Wellenlängen im gleichen Verhältnis abgeschwächt werden. Dadurch kann der Strahlungsempfänger bei verschieden dicken Meßsubstanzen stets mit der gleichen, beispielsweise auf die Vergleichswellenlänge $\lambda_2$ bezogenen Intensität I beaufschlagt und damit stets im gleichen Arbeitspunkt betrieben werden.

Die optoelektronische Einrichtung nach der Erfindung hat eine hohe Lichtstärke durch die Nutzung des vollen Öffnungsverhältnisses der ersten Kondensorlinse 40 und des rückwärtigen Beleuchtungskonkavspiegels 6. Die Gestaltungsform bewirkt ferner eine räumliche Trennung des Meßstrahls 14 und des Vergleichsstrahls 16 über den Drehspiegel und zugleich die Wiedervereinigung der Teilstrahlen auf der gemeinsamen optischen Achse des Strahls 26. Die Interferenzfilter 18 und 20 werden unter konstantem Einfallswinkel durchstrahlt. Die Einrichtung bewirkt außerdem einen identischen geometrischen Strahlengang für die beiden alternierend emittierten Wellenlängen $\lambda_1$ und $\lambda_2$ nach dem Austritt aus dem Gehäuse 54 der optoelektronischen Einrichtung. Durch die gleichzeitige Wirkung des

0027148

Drehspiegels 10 an zwei Zwischenbildern erhält man eine sehr kurze mechanische Phasenumschaltung.

4 Patentansprüche
2 Figuren

- 1 -    VPA 78 P 7532 EUR

<u>Patentansprüche</u>

1. Optoelektronische Einrichtung zur Messung der Konzentration einer Meßsubstanz durch Absorbieren der Strahlung einer Meßwellenlänge und Herleitung eines Meßsignals durch Vergleich mit der Strahlung einer Vergleichswellenlänge, d a d u r c h   g e k e n n z e i c h n e t, daß ein kreisscheibenförmiger, doppelseitig verspiegelter Drehspiegel (10), dessen äußerer Rand mit wenigstens einem Ausschnitt versehen ist, derart geneigt im Strahlengang (4) einer Strahlungsquelle (2) angeordnet ist, daß mit der Drehung jeweils abwechselnd durch den Ausschnitt ein Teilstrahl (14) und durch Reflexion ein weiterer Teilstrahl (16) gebildet wird und daß dem ersten Teilstrahl (14) ein Schmalband-Interferenzfilter (18) mit der als Meßwellenlänge benutzten Zentralwellenlänge ($\lambda_1$) und im zweiten Teilstrahl (16) ein Schmalband-Interferenzfilter (20) mit der als Vergleichswellenlänge benutzten Zentralwellenlänge ($\lambda_2$) vorgesehen ist, und daß eine Reflexion der Teilstrahlen an jeweils einem Festspiegel zum diagonal gegenüberliegenden Teil des Drehspiegels (10) vorgesehen ist, und daß der Ausschnitt am Drehspiegel (10) derart gewählt ist, daß dem Ausschnitt jeweils am diagonal gegenüberliegenden Umfang des Drehspiegels (10) ein spiegelnder Teil zugeordnet ist.

2. Einrichtung nach Anspruch 1, d a d u r c h   g e - k e n n z e i c h n e t,   daß ein kreisringscheibenförmiger Drehspiegel (10) vorgesehen ist, dessen innere Öffnung mit dem Rand einer topfförmigen Hülse (11) verbunden ist, in die ein Antriebsmotor (12) des Drehspiegels (10) hineinragt.

3. Einrichtung nach Anspruch 1 oder 2, d a d u r c h   g e k e n n z e i c h n e t,   daß im Strahlengang (4) der Strahlungsquelle (2) ein Vorfilter (8) vorgesehen ist.

4. Einrichtung nach einem der Ansprüche 1 bis 3,  d a - d u r c h   g e k e n n z e i c h n e t,   daß im Strahlengang (26) der wiedervereinigten Teilstrahlen (14, 16) eine verstellbare Irisblende (48) vorgesehen ist.

FIG 1

FIG 2

Europäisches
Patentamt

**EUROPÄISCHER RECHERCHENBERICHT**

Nummer der Anmeldung

EP 79 10 3895

| | EINSCHLÄGIGE DOKUMENTE | | | KLASSIFIKATION DER ANMELDUNG (Int.Cl.) |
|---|---|---|---|---|
| Kategorie | Kennzeichnung des Dokuments mit Angabe, soweit erforderlich, der maßgeblichen Teile | betrifft Anspruch | | G 01 J 3/42 |
| X | US - A - 3 459 951 (J. HOWARTH et al.)<br><br>* Spalten 2-4; Figuren 1,3 *<br><br>---- | 1,3 | | |

**RECHERCHIERTE SACHGEBIETE (Int. Cl. 3)**

G 01 J   3/42
G 01 N 21/31
G 01 J   1/36
G 01 N 21/37

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde
    liegende Theorien oder
    Grundsätze

E: kollidierende Anmeldung

D: in der Anmeldung angeführtes
    Dokument

L: aus andern Gründen
    angeführtes Dokument

&: Mitglied der gleichen Patent-
    familie, übereinstimmendes
    Dokument

| X | Der vorliegende Recherchenbericht wurde für alle Patentansprüche erstellt. |
|---|---|

| Recherchenort. | Abschlußdatum der Recherche | Prüfer |
|---|---|---|
| Den Haag | 23-05-1980 | BOEHM |

EPA form 1503.1   06.78